# EUROPEAN PATENT SPECIFICATION

(11) **EP 3 643 590 B1**
(45) Date of publication and mention of the grant of the patent: **09.02.2022**
(21) Application number: 18202011.5
(22) Date of filing: 23.10.2018
(51) Int. Cl.: B62J 7/04, B62J 1/28, B62J 1/08

(54) **ADJUSTABLE STRUCTURE FOR REAR SEAT OF BICYCLE**
VERSTELLBARE STRUKTUR FÜR DEN HINTEREN SITZ EINES FAHRRADES
STRUCTURE RÉGLABLE POUR SIÈGE ARRIÈRE DE BICYCLETTE

(43) Date of publication of application: 29.04.2020
(73) Proprietor: Eli International Enterprise Co., LTD., Changhua City, Changhua County 500 (TW); Cheng Chen, Pao-Chin, 500 Changhua City, Changhua County (TW)
(72) Inventor: CHENG, Yuan Lin, 500 Changhua City, Changhua County (TW)
(74) Representative: Viering, Jentschura & Partner mbB Patent- und Rechtsanwälte

(56) References cited:
- EP-A1- 1 375 320
- US-B1- 10 093 375

## Description

### FIELD OF THE INVENTION

The present invention relates to an adjusting structure for rear seat of bicycle, and more particularly to an adjusting structure for easily and quickly adjusting and stable structure.

### BACKGROUND OF THE INVENTION

Please refer to Taiwanese patent No. M250854, it discloses a collapsible and adjustable structure for leaning cushion of bicycle and the like. It comprises a frame, and a seat post and a leaning cushion. The bottom of a supporting rod of the leaning cushion is pivoted to a suitable position of the frame which is located at a rear side of the seat post. A linking rod is arranged at the supporting rod and the end of the linking rod opposite to the supporting rod has at least one fixing hole for providing the fixing member arranged on the seat post to pass through and position. According to above arrangement, when the fixing member passes through the fixing hole and the linking rod is fixed on the seat post, the leaning cushion which stays vertically is located in back of the saddle so as to provide the back of the user to lean against. When the fixing member moves away from the fixing hole of the lining rod to make the linking rod release from the seat post, the fixing member may be the fulcrum to make the leaning cushion and the supporting rod pivot to collapse. Therefore, it may be collapsible and adjustable.

As above mentioned structure, the fixing member may only pass through the fixing holes on the linking rod. The range of angular adjustment is narrow. It does not satisfy the riders with different stature.

In addition, it may not to support other loadings or objects.

Another prior art structure is shown in the document US 10,093,375 B1. It shows a rear shelf with an adjustable mounting structure. It shows a toothed typed adjustment structure capable of adjusting the rear shelf. The rear seat linking portion shows a teeth portion without further details. The rear shelf shows two grooves.

In view of the foregoing circumstances, the inventor has invested a lot of time to study the relevant knowledge, compare the pros and cons, research and develop related products. After quite many experiments and tests, the "adjustable structure for rear seat of bicycle" of this invention is eventually launched to improve the foregoing shortcomings, to meet the public use.

### SUMMARY OF THE INVENTION

An object of this invention is provided an adjustable structure for rear seat of bicycle. The rear seat and the clamp are respectively arranged a first teeth portion and a second teeth portion. The connection member has a third teeth portion and a fourth teeth portion. The first teeth portion and the third teeth portion are engaged with each other and the second teeth portion and the fourth teeth portion are engaged with each other. The first, second, third, and fourth teeth portions are allowed a little rotation. It may adjust position without totally releasing the screws. It may be quickly positioned.

Another object of this invention is provided an adjustable structure for rear seat of bicycle. Due to the engagement of the first teeth portion and the third teeth portion and the engagement of the second teeth portion and the fourth teeth portion, the supporting capacity of the rear seat is increased by screwing the screws and the nuts so as to prevent from shifting.

In order to achieve above objects, an adjustable structure for rear seat of bicycle is provided and mainly comprises a rear seat, a clamp, and a connection member, wherein one end of the rear seat is used for carrying an object, the other end thereof opposite to the object has a rear-seat linking portion which is linked to the connection member, one side of the rear seat having the rear-seat linking portion includes a rear-seat linking surface, the rear-seat linking portion is protruded from the rear-seat linking surface, a rear-seat through hole is formed at a center of the rear-seat linking portion, a rear-seat stopping surface is downwardly formed from a top surface of the rear-seat linking portion, and a wall surface of the rear-seat linking portion has a first rear-seat teeth portion and a second rear-seat teeth portion; the clamp is linked to a seat post of a bicycle, one side of the clamp opposite to the seat post has a clamp linking portion which is linked to the connection member, the side of the clamp having the clamp linking portion includes a clamp linking surface, the clamp linking portion is protruded from the clamp linking surface, a clamp through hole is formed at a center of the clamp linking portion, a clamp stopping surface is downwardly formed from a top surface of the clamp linking portion, and a wall surface of the clamp linking portion has a first clamp teeth portion and a second clamp teeth portion; and the connection member is used for connect the rear seat and the clamp, two sides of the connection member are respectively arranged a connection portion, a peripheral of the connection portion has a connection surface which is used to attach the rear-seat linking surface and the clamp linking surface, the connection portion is used to fix the rear-seat linking portion and the clamp linking portion, a height of the connection portion is lower than a height of the connection surface, a wall surface of the connection portion has a third teeth portion, the connection portion has a convex body, a wall surface of the convex body has a fourth teeth portion, the third teeth portion of the connection portion adjacent to the rear seat is arranged corresponding to the first rear-seat teeth portion, the third teeth portion of the connection portion adjacent to the clamp is arranged corresponding to the first clamp teeth portion, the fourth teeth portion of the connection portion adjacent to the rear seat is arranged corresponding to the second rear-seat teeth portion, the fourth teeth portion of the connection portion adjacent to the clamp is arranged corresponding to the second clamp teeth portion, the connection portion has a connection through hole, the connection through hole of the connection portion adjacent to the rear seat is arranged corresponding to the rear-seat through hole, the connection through hole of the connection portion adjacent to the clamp is arranged corresponding to the clamp through hole, a top of the convex body of the connection portion adjacent to the rear seat is abutted against the rear-seat stopping surface, a top of the convex body of the connection portion adjacent to the clamp is abutted against the clamp stopping surface, and then the connection member connects with the rear seat and the clamp through multiple screws and nuts.

According to above mentioned structure, the effects are provided and described as follows.

Firstly, the teeth portions arranged on the linking portion and the connection portion are engaged with each other so that the shearing force produced to abut against the weight of the rear seat is provided and prevent the rear seat from shifting.

Secondly, the rear seat may be angularly adjusted without totally releasing the screws and the nuts. It may achieve the effects of quick adjustment and convenience.

Further features and advantages of the present invention will become apparent to those of skill in the art in view of the detailed description of preferred embodiments which follows, when considered together with the attached drawings and claims.

### BRIEF DESCRIPTION OF THE DRAWINGS

All the objects, advantages, and novel features of the invention will become more apparent from the following detailed descriptions when taken in conjunction with the accompanying drawings.
FIG. 1 is a perspective view of an adjustable structure for rear seat of bicycle of the present invention.
FIG. 2 is an exploded view of the adjustable structure for rear seat of bicycle of the present invention.
FIG. 3 is another exploded view of the adjustable structure for rear seat of bicycle of the present invention.
FIG. 4 is a plan view of the adjustable structure for rear seat of bicycle of the present invention while in use.

### DESCRIPTION OF THE PREFERRED EMBODIMENT

Referring now to the drawings where like characteristics and features among the various figures are denoted by like reference characters.

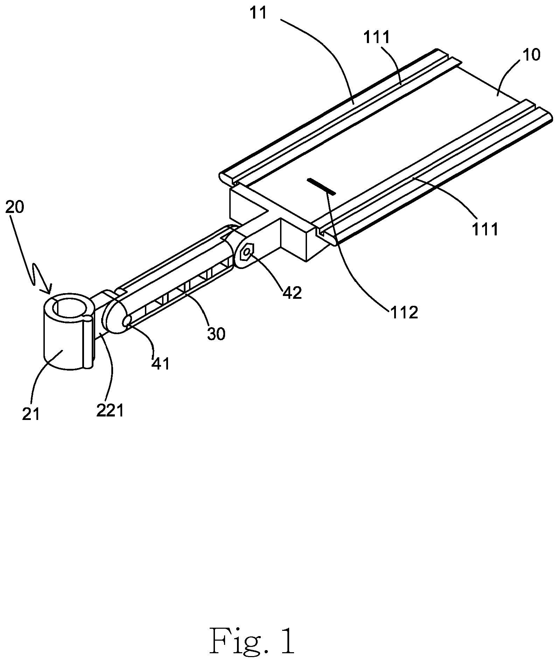

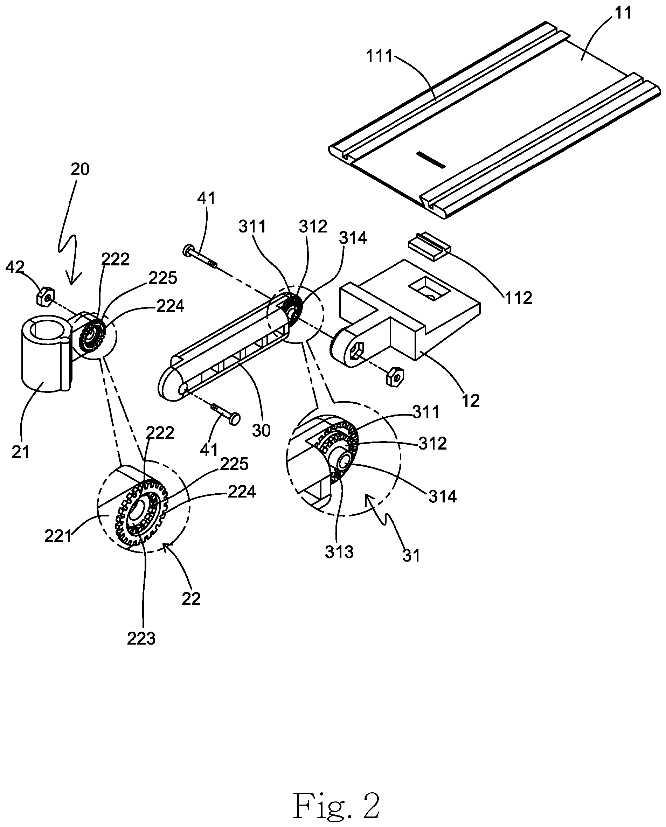

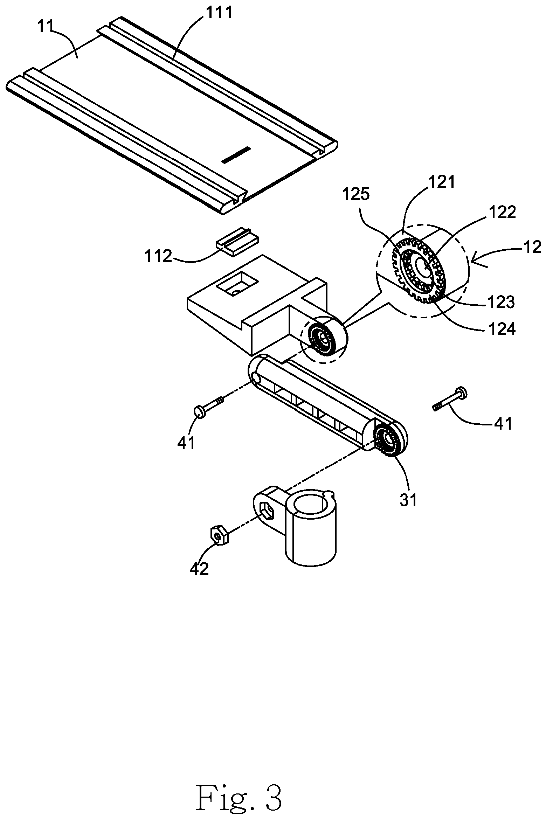

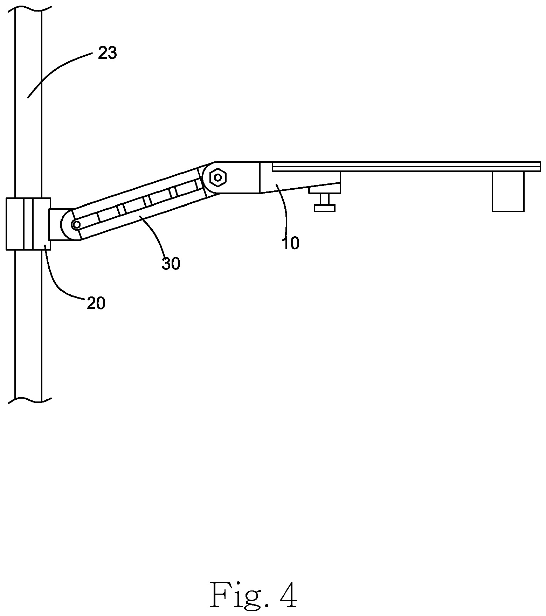

Please refer to FIGs. 1 to 4, the adjustable structure for rear seat of bicycle mainly comprises a rear seat 10, a clamp 20, and a connection member 30.

One end of the rear seat 10 has a plate body 11 which is used for carrying an object. At least one sliding slot 111 is arranged on the plate body 11. The bottom of the at least one sliding slot 111 has an elastic pushing member 112 which is used for fastening the object. The object may be a duffel bag, back cushion, and etc. The other end of the rear seat 10 opposite to the object has a rear-seat linking portion 12 which is linked to the connection member 30. One side of the rear seat 10 having the rear-seat linking portion 12 includes a rear-seat linking surface 121. The rear-seat linking portion 12 is slightly protruded from the rear-seat linking surface121. A rear-seat through hole 122 is formed at a center of the rear-seat linking portion 12. A rear-seat stopping surface 123 is downwardly formed from a top surface of the rear-seat linking portion 12. The rear-seat linking portion is like circular pipe. And a wall surface of the rear-seat linking portion 12 has a first rear-seat teeth portion 124 and a second rear-seat teeth portion 125.

The clamp 20 is linked to a seat post 23 of a bicycle (not shown). The clamp 20 has an arc clamping piece 21 for clamping the seat post 23. One side of the clamp 20 opposite to the seat post 23 has a clamp linking portion 22 which is linked to the connection member 30. The side of the clamp 20 having the clamp linking portion 22 includes a clamp linking surface 221. The clamp linking portion 22 is slightly protruded from the clamp linking surface221. A clamp through hole 222 is formed at a center of the clamp linking portion 22. A clamp stopping surface 223 is downwardly formed from a top surface of the clamp linking portion 22. And a wall surface of the clamp linking portion 22 has a first clamp teeth portion 224 and a second clamp teeth portion 225.

The connection member 30 is used for connect the rear seat 10 and the clamp 20. Two sides of the connection member 30 are respectively arranged a connection portion 31. A peripheral of the connection portion 31 has a connection surface which is used to attach the rear-seat linking surface 121 and the clamp linking surface 221. The connection portion 31 is used to fix the rear-seat linking portion 12 of the rear seat 10 and the clamp linking portion 22 of the clamp 20. A height of the connection portion 31 is lower than a height of the connection surface. A wall surface of the connection portion 31 has a third teeth portion 311. The connection portion 31 has a convex body 312. A wall surface of the convex body 312 has a fourth teeth portion 313. The third teeth portion 311 of the connection portion 31 adjacent to the rear seat 10 is arranged corresponding to the first rear-seat teeth portion 124. The third teeth portion 311 of the connection portion 31 adjacent to the clamp 20 is arranged corresponding to the first clamp teeth portion 224. The fourth teeth portion 313 of the connection portion 31 adjacent to the rear seat 20 is arranged corresponding to the second rear-seat teeth portion 125. The fourth teeth portion 313 of the connection portion 31 adjacent to the clamp 20 is arranged corresponding to the second clamp teeth portion 225. The connection portion 31 has a connection through hole. The connection through hole of the connection portion 31 adjacent to the rear seat 10 is arranged corresponding to the rear-seat through hole 122. The connection through hole of the connection portion 31 adjacent to the clamp 20 is arranged corresponding to the clamp through hole 222. A top of the convex body 312 of the connection portion 31 adjacent to the rear seat 20 is abutted against the rear-seat stopping surface 123. A top of the convex body 312 of the connection portion 31 adjacent to the clamp 20 is abutted against the clamp stopping surface 223. And then the connection member 30 connects with the rear seat 10 and the clamp 20 through multiple screws 41 and nuts 42.

According to above mentioned structure, there are many effects being achieved and described as follows.

Firstly, the screws 41 are screwed in the connection member 30 by a tool and the nuts 42 are respectively installed and fix to a linking member and the clamp 20 by the tool. The third teeth portion 311 is concave and the rear-seat first teeth portion 124 and the clamp first teeth portion 224 are convex so that they may be integrated with each other. The fourth teeth portion 313 is arranged on the convex body 312 and the second rear-seat teeth portion 125 and the second clamp teeth portion 225 are respectively arranged at an inner side of the first rear-seat teeth portion 124 and an inner side of the first clamp teeth portion 224 so that they may be also integrated with each other. Due to the two integration structure, the total structure may be stable after screwing and fixing and prevent from shifting.

Secondly, in some embodiment, one side of the connection member 30 opposite to the connection portion 31 has a counterbored hole. One end of the clamp 20 opposite to the clamp linking portion 22 and one end of the rear seat 10 opposite to the rear-seat linking portion 12 are respectively arranged a hexagonal socket for providing the nuts 42 to fix. In some embodiment, a quick release may be selected.

The foregoing descriptions are merely the exemplified embodiments of the present invention, where the scope of the claim of the present invention is not intended to be limited by the embodiments.

## Claims

1. An adjustable structure for rear seat (10) of bicycle, mainly comprising a rear seat (10), a clamp (20), and a connection member (30), wherein: one end of the rear seat (10) is used for carrying an object, the other end thereof opposite to the object has a rear-seat linking portion which is linked to the connection member (30), one side of the rear seat (10) having the rear-seat linking portion includes a rear-seat linking surface, the rear-seat linking portion is protruded from the rear-seat linking surface, a rear-seat through hole (122) is formed at a center of the rear-seat linking portion, a rear-seat stopping surface is downwardly formed from a top surface of the rear-seat linking portion, and a wall surface of the rear-seat linking portion has a first rear-seat teeth portion (124) and a second rear-seat teeth portion (125); the clamp (20) is linked to a seat post (23) of a bicycle, one side of the clamp (20) opposite to the seat post (23) has a clamp linking portion (22) which is linked to the connection member (30), the side of the clamp (20) having the clamp linking portion (22) includes a clamp linking surface (221), the clamp linking portion (22) is protruded from the clamp linking surface (221), a clamp through hole (222) is formed at a center of the clamp linking portion (22), a clamp stopping surface (223) is downwardly formed from a top surface of the clamp linking portion (22), and a wall surface of the clamp linking portion (22) has a first clamp teeth portion (224) and a second clamp teeth portion (225); the connection member (30) is used for connect the rear seat (10) and the clamp (20), two sides of the connection member (30) are respectively arranged a connection portion (31), a peripheral of the connection portion (31) has a connection surface which is used to attach the rear-seat linking surface (121) and the clamp linking surface (221), the connection portion (31) is used to fix the rear-seat linking portion and the clamp linking portion (22), a height of the connection portion (31) is lower than a height of the connection surface, a wall surface of the connection portion (31) has a third teeth portion (311), the connection portion (31) has a convex body (312), a wall surface of the convex body (312) has a fourth teeth portion (313), the third teeth portion (311) of the connection portion (31) adjacent to the rear seat (10) is arranged corresponding to the first rear-seat teeth portion (124), the third teeth portion (311) of the connection portion (31) adjacent to the clamp (20) is arranged corresponding to the first clamp teeth portion (224), the fourth teeth portion (313) of the connection portion (31) adjacent to the rear seat (10) is arranged corresponding to the second rear-seat teeth portion (125), the fourth teeth portion (313) of the connection portion (31) adjacent to the clamp (20) is arranged corresponding to the second clamp teeth portion (225), the connection portion (31) has a connection through hole, the connection through hole of the connection portion (31) adjacent to the rear seat (10) is arranged corresponding to the rear-seat through hole (122), the connection through hole of the connection portion (31) adjacent to the clamp (20) is arranged corresponding to the clamp through hole (222), a top of the convex body (312) of the connection portion (31) adjacent to the rear seat (10) is abutted against the rear-seat stopping surface, a top of the convex body of the connection portion (31) adjacent to the clamp (20) is abutted against the clamp stopping surface (223), and then the connection member (30) connects with the rear seat (10) and the clamp (20) through multiple screws (41) and nuts (42); wherein a counterbored hole is arranged at one side of the connection member (30) opposite to the connection portion (31), and one end of the clamp (20) opposite to the clamp linking portion (22) and one end of the rear seat (10) opposite to the rear-seat linking portion are respectively arranged a hexagonal socket for providing the nuts (42) to fix; wherein the rear seat (10) has at least one sliding slot (111), and an elastic pushing member (112) is arranged at bottom of the at least one sliding slot (111) so that the object which is guided into the at least one sliding slot (111) is fixed by the elastic pushing member (112); wherein the clamp (20) has an arc clamping piece (21) for clamping the seat post (23).

## Patentansprüche

1. Ein justierbarer Aufbau eines Fahrrad-Rücksitzes (10), hauptsächlich umfassend einen Rücksitz (10), eine Klammer (20) und ein Verbindungsglied (30), wobei: ein Ende des Rücksitzes (10) zum Tragen eines Gegenstand benutzt wird, während dessen anderes Ende gegenüber dem Gegenstand einen Verbindungsteil des Rücksitzes aufweist, der am Verbindungsglied (30) befestigt ist; eine Seite des Rücksitzes (10), die mit dem Verbindungsteil des Rücksitzes gebildet ist, eine Verbindungsfläche des Rücksitzes aufweist; der Verbindungsteil des Rücksitzes von der Verbindungsfläche des Rücksitzes vorsteht; ein Durchgangsloch (122) des Rücksitzes in einer Mitte des Verbindungsteils des Rücksitzes gebildet ist; eine Anschlagfläche des Rücksitzes von einer oberen Fläche des Verbindungsteils des Rücksitzes nach unten gebildet ist; eine Wandfläche des Verbindungsteils des Rücksitzes eine erste Verzahnung (124) des Rücksitzes und eine zweite Verzahnung (125) des Rücksitzes aufweist; die Klammer (20) an einer Sattelstütze (23) eines Fahrrades befestigt ist; eine Seite der Klammer (20) gegenüber der Sattelstütze (23) einen Verbindungsteil (22) der Klammer aufweist, der am Verbindungsglied (30) befestigt ist; die Seite der Klammer (20), an der der Verbindungsteil (22) der Klammer befestigt ist, eine Verbindungsfläche (221) der Klammer aufweist; der Verbindungsteil (22) der Klammer von der Verbindungsfläche (221) der Klammer vorsteht; ein Durchgangsloch (222) der Klammer in einer Mitte des Verbindungsteils (22) der Klammer gebildet ist; eine Anschlagfläche (223) der Klammer von einer oberen Fläche des Verbindungsteils (22) der Klammer nach unten gebildet ist; eine Wandfläche des Verbindungsteils (22) der Klammer eine erste Verzahnung (224) der Klammer und eine zweite Verzahnung (225) der Klammer aufweist; der Rücksitz (10) und die Klammer (20) mit dem Verbindungsglied (30) befestigt werden; auf zwei Seiten des Verbindungsglieds (30) jeweils ein Verbindungsteil (31) angeordnet ist; eine Peripherie des Verbindungsteils (31) eine Verbindungsfläche aufweist, an die Verbindungsfläche (121) des Rücksitzes und die Verbindungsfläche (221) der Klammer befestigt werden; mit dem Verbindungsteil (31) der Verbindungsteil des Rücksitzes und der Verbindungsteil (22) der Klammer befestigt werden; eine Höhe des Verbindungsteils (31) niedriger als eine Höhe der Verbindungsfläche ist; eine Wandfläche des Verbindungsteils (31) eine dritte Verzahnung (311) aufweist; der Verbindungsteil (31) einen konvexen Körper (312) aufweist; eine Wandfläche des konvexen Körpers (312) eine vierte Verzahnung (313) aufweist; die dritte Verzahnung (311) des Verbindungsteils (31), der neben dem Rücksitz (10) angeordnet ist, in Übereinstimmung mit der ersten Verzahnung (124) angeordnet ist; die dritte Verzahnung (311) des Verbindungsteils (31), der neben der Klammer (20) angeordnet ist, in Übereinstimmung mit der ersten Verzahnung (224) angeordnet ist; die vierte Verzahnung (313) des Verbindungsteils (31), der neben der Klammer (20) angeordnet ist, in Übereinstimmung mit der zweiten Verzahnung (125) angeordnet ist; der Verbindungsteil (31) ein Verbindungs-Durchgangsloch aufweist; das Verbindungs-Durchgangsloch des Verbindungsteils (31) neben dem Rücksitz (10) in Übereinstimmung mit dem Durchgangsloch (122) des Rücksitzes gebildet ist; das Verbindungs-Durchgangsloch des Verbindungsteils (31) neben der Klammer (20) in Übereinstimmung mit dem Durchgangsloch (222) der Klammer gebildet ist; eine Oberseite des konvexen Körpers (312) des Verbindungsteils (31) neben dem Rücksitz (10) an die Anschlagfläche des Rücksitzes anstößt; eine Oberseite des konvexen Körpers des Verbindungsteils (31) neben der Klammer (20) an die Anschlagfläche (223) der Klammer anstößt; das Verbindungsglied (30) mit mehreren Schrauben (41) und Muttern (42) an den Rücksitz (10) und an die Klammer (20) befestigt wird; auf einer Seite des Verbindungsglieds (30) gegenüber dem Verbindungsteil (31) eine Senkbohrung gebildet ist; an einem Ende der Klammer (20) gegenüber dem Verbindungsteil (22) der Klammer und an einem Ende des Rücksitzes (10) gegenüber dem Verbindungsteil des Rücksitzes je ein Innensechskant zum Befestigen der Muttern (42) vorgesehen ist; der Rücksitz (10) mindestens einen Gleitschlitz (111) aufweist; ein elastisches Schubglied (112) an der Unterseite des mindestens einen Gleitschlitzes (111) vorgesehen ist, so dass der Gegenstand, der in den mindestens einen Gleitschlitz (111) geführt wird, mit dem elastischen Schubglied (112) befestigt wird; die Klammer (20) ein Bogenklammerstück (21) aufweist, um an der Sattelstütze (23) befestigt zu werden.

## Revendications

1. Structure réglable pour un siège arrière (10) de bicyclette, comprenant principalement un siège arrière (10), un élément de serrage (20), et un élément de connexion (30), **caractérisée par le fait que** : une extrémité du siège arrière (10) est utilisée pour porter un objet, son autre extrémité opposée à l'objet présente une partie de liaison du siège arrière qui est reliée à l'élément de connexion (30), un côté du siège arrière (10) comportant la partie de liaison du siège arrière comprend une surface de liaison du siège arrière, la partie de liaison du siège arrière fait saillie depuis la surface de liaison du siège arrière, un trou traversant du siège arrière (122) est formé à un centre de la partie de liaison du siège arrière, une surface d'arrêt du siège arrière est formée vers le bas depuis une surface supérieure de la partie de liaison du siège arrière, et une surface de paroi de la partie de liaison du siège arrière présente une première partie dentée du siège arrière (124) et une deuxième partie dentée du siège arrière (125) ; l'élément de serrage (20) est relié à une tige de selle (23) d'une bicyclette, un côté de l'élément de serrage (20) opposé à la tige de selle (23) présente une partie de liaison de l'élément de serrage (22) qui est reliée à l'élément de connexion (30), le côté de l'élément de serrage (20) comportant la partie de liaison de l'élément de serrage (22) comprend une surface de liaison de l'élément de serrage (221), la partie de liaison de l'élément de serrage (22) fait saillie depuis la surface de liaison de l'élément de serrage (221), un trou traversant de l'élément de serrage (222) est formé à un centre de la partie de liaison de l'élément de serrage (22), une surface d'arrêt de l'élément de serrage (223) est formée vers le bas depuis une surface supérieure de la partie de liaison de l'élément de serrage (22), et une surface de paroi de la partie de liaison de l'élément de serrage (22) présente une première partie dentée de l'élément de serrage (224) et une seconde partie dentée de l'élément de serrage (225) ; l'élément de connexion (30) est utilisé pour connecter le siège arrière (10) et l'élément de serrage (20), deux côtés de l'élément de connexion (30) sont respectivement disposés sur une partie de connexion (31), un périphérique de la partie de connexion (31) présente une surface de connexion qui est utilisée pour attacher la surface de liaison du siège arrière (121) et la surface de liaison de l'élément de serrage (221), la partie de connexion (31) est utilisée pour attacher la partie de liaison du siège arrière et la partie de liaison de l'élément de serrage (22), une hauteur de la partie de connexion (31) est inférieure à une hauteur de la surface de connexion, une surface de paroi de la partie de connexion (31) présente une troisième partie dentée (311), la partie de connexion (31) présente un corps convexe (312), une surface de paroi du corps convexe (312) présente une quatrième partie dentée (313), la troisième partie dentée (311) de la partie de connexion (31) adjacente au siège arrière (10) est disposée de manière à correspondre à la première partie dentée du siège arrière (124), la troisième partie dentée (311) de la partie de connexion (31) adjacente à l'élément de serrage (20) est disposée de manière à correspondre à la première partie dentée de l'élément de serrage (224), la quatrième partie dentée (313) de la partie de connexion (31) adjacente au siège arrière (10) est disposée de manière à correspondre à la deuxième partie dentée du siège arrière (125), la quatrième partie dentée (313) de la partie de connexion (31) adjacente à l'élément de serrage (20) est disposée de manière à correspondre à la seconde partie dentée de l'élément de serrage (225), la partie de connexion (31) présente un trou traversant de connexion, le trou traversant de connexion de la partie de connexion (31) adjacent au siège arrière (10) est disposé de manière à correspondre au trou traversant du siège arrière (122), le trou traversant de connexion de la partie de connexion (31) adjacent à l'élément de serrage (20) est disposé de manière à correspondre au trou traversant de l'élément de serrage (222), un sommet du corps convexe (312) de la partie de connexion (31) adjacent au siège arrière (10) est appuyé contre la surface d'arrêt du siège arrière, un sommet du corps convexe de la partie de connexion (31) adjacent à l'élément de serrage (20) est appuyé contre la surface d'arrêt de l'élément de serrage (223), et ensuite l'élément de connexion (30) se connecte au siège arrière (10) et à l'élément de serrage (20) par le biais de vis (41) et d'écrous (42) multiples ; un trou contre-alésé est disposé sur un côté de l'élément de connexion (30) à l'opposé de la partie de connexion (31), et une extrémité de l'élément de serrage (20) à l'opposé de la partie de liaison de l'élément de serrage (22) et une extrémité du siège arrière (10) à l'opposé de la partie de liaison du siège arrière sont respectivement disposés au niveau d'une douille hexagonale pour fournir les écrous (42) en vue de la fixation ; le siège arrière (10) présente au moins une fente coulissante (111), et un élément de poussée élastique (112) est disposé à la base de la ou des fentes coulissantes (111) de sorte que l'objet qui est guidé dans la ou les fentes coulissantes (111) est maintenu par l'élément de poussée élastique (112) ; l'élément de serrage (20) présente un élément de serrage en forme d'arc (21) pour serrer la tige de selle (23).
